(19) Europäisches Patentamt
European Patent Office
Office européen des brevets

(11) **EP 4 390 603 B1**

(12) **FASCICULE DE BREVET EUROPÉEN**

(45) Date de publication et mention
de la délivrance du brevet:
**28.01.2026 Bulletin 2026/05**

(21) Numéro de dépôt: **23217646.1**

(22) Date de dépôt: **18.12.2023**

(51) Classification Internationale des Brevets (IPC):
**G05D 1/246** *(2024.01)* **G05D 1/689** *(2024.01)*

(52) Classification Coopérative des Brevets (CPC):
**G05D 1/246; G05D 1/689;** B64U 2101/30;
B64U 2101/31; G05D 2101/15; G05D 2105/85;
G05D 2109/254

(54) **PROCÉDÉ DE CONTRÔLE D'AU MOINS UN DRONE ET CONTRÔLEUR ASSOCIÉ**

VERFAHREN ZUR STEUERUNG MINDESTENS EINER DROHNE UND STEUERUNG DAFÜR

METHOD FOR CONTROLLING AT LEAST ONE DRONE AND ASSOCIATED CONTROLLER

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **19.12.2022 FR 2213738**

(43) Date de publication de la demande:
**26.06.2024 Bulletin 2024/26**

(73) Titulaire: **THALES**
**92190 Meudon (FR)**

(72) Inventeurs:
• **KAZMIEROWSKI, Alexandre**
**91767 PALAISEAU CEDEX (FR)**
• **DUQUEROIE, Bertrand**
**91767 PALAISEAU CEDEX (FR)**
• **MOUNIER, Jean-Philippe**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**US-A1- 2006 085 106**

**Description**

La présente invention concerne un procédé de contrôle d'au moins un drone.

L'invention concerne aussi contrôleur d'au moins un drone.

Des drones, ou UAVs (de l'anglais « Unmanned Aerial Vehicle » pour « aéronef sans équipage ») comprennent par exemple un ou plusieurs capteurs d'images pour observer des zones géographiques. En particulier, des zones géographiques à observer sont connues à l'avance, ou prédéterminées, et un drone se déplace entre ces zones pour les observer successivement.

L'observation de grandes zones géographiques prédéterminées implique souvent un très grand nombre de prises de vue par le drone. Cela est souvent chronophage. En utilisant plusieurs drones en parallèle, le temps pour observer chaque zone parmi les zones prédéterminées est réduit.

Toutefois, souvent la coordination d'une pluralité de drones est complexe et difficile à mettre en oeuvre par un opérateur.

US20060085106A1 décrit un exemple de méthode pour observer une zone à l'aide d'un ou plusieurs drones, la méthode consistant à déterminer des commandes de déplacement à partir d'une carte d'observation définissant des zones à surveiller, d'une carte d'éclairage indiquant leur état d'observation et d'informations relatives à la position et à l'orientation des drones.

Aussi, il est souhaitable de réduire encore le temps de parcours du ou des drones, tout en observant soit l'ensemble des zones géographiques prédéterminées, soit au moins un nombre minimal de ces zones géographiques prédéterminées.

Un problème concernant l'optimisation d'une distance de parcours est le problème du voyageur de commerce (ou « Travelling salesman problem » en anglais). Ce problème permet de déterminer une distance minimale entre une pluralité de villes, tout en visitant chaque ville une fois. Lorsque plusieurs agents se déplacent entre les villes, le problème est appelé « Multiple Traveling Salesman Problem » ou MTSP en anglais (pour problème du voyageur de commerce multiple).

En revanche, de telles approches ne prennent pas en compte certaines contraintes et/ou capacités de drones observant des zones géographiques prédéterminées.

Aussi, dans certains cas, les zones à observer sont susceptibles d'évoluer en cours d'une mission, ce modifie ainsi le problème à résoudre.

Un but de la présente invention est ainsi d'obtenir un procédé de contrôle présentant un contrôle optimisé d'au moins un drone pour observer des zones géographiques prédéterminées.

À cet effet, l'invention a pour objet un procédé de contrôle selon la revendication 1

En effet, le procédé de contrôle permet d'obtenir une observation très efficace des zones à observer, puisqu'il prend en compte plusieurs cartes ainsi que la position du drone et/ou du capteur d'images. Ainsi, le procédé de contrôle permet d'obtenir une observation des zones à observer dans un laps de temps très faible.

Suivant d'autres aspects avantageux de l'invention, le procédé de contrôle comprend une ou plusieurs caractéristiques selon les revendications 2 à 9, prise(s) isolément ou suivant toutes les combinaisons techniquement possibles.

L'invention a aussi pour objet un contrôleur d'au moins un drone selon la revendication 10.

Ces caractéristiques et avantages de l'invention apparaîtront à la lecture de la description qui va suivre, donnée uniquement à titre d'exemple non limitatif et faite en référence aux dessins annexés, sur lesquels :

- [Fig 1] la figure 1 est une vue schématique d'une pluralité de drones et d'une région géographique avec un convoi de véhicules ;

- [Fig 2] la figure 2 est une vue schématique d'un contrôleur configuré pour contrôler l'un ou plusieurs des drones de la figure 1 ;

- [Fig 3] la figure 3 est une vue schématique d'un exemple d'une carte d'observation comprenant plusieurs zones à observer par les drones de la figure 1 ;

- [Fig 4] la figure 4 est une vue schématique pluralité de cartes comprenant un autre exemple de la carte d'observation de la figure 3, une carte d'éclairage, une carte de convoi et une carte d'information de drone ;

- [Fig 5] la figure 5 est une vue schématique d'un réseau de neurones du contrôleur de la figure 2, et

- [Fig 6] la figure 6 est un ordinogramme d'un procédé de contrôle pour le contrôle de l'un ou plusieurs des drones de la figure 1.

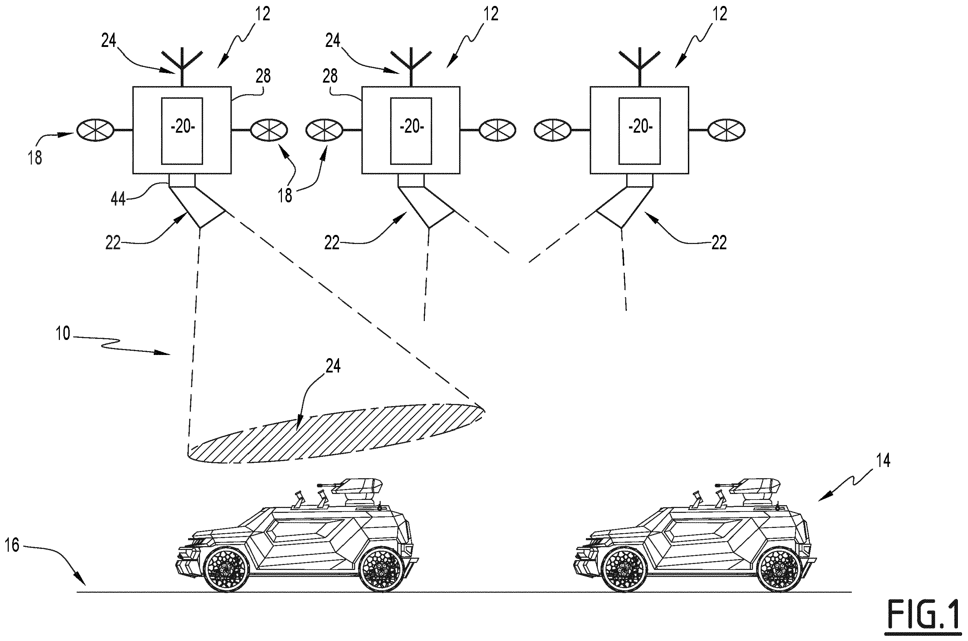

En référence à la figure 1, un ensemble 10 comprend plusieurs drones 12, également appelés UAVs (de l'anglais « Unmanned Aerial Vehicle » pour « aéronef sans équipage »), et un convoi de véhicules 14 dans une région géographique 16, également appelée région 16. En variante, l'ensemble 10 comprend un seul drone 12.

Chaque drone 12 comprend par exemple au moins un dispositif de propulsion 18 configuré pour déplacer le drone 12, tel qu'au moins rotor muni d'un moteur, un contrôleur 20 configuré pour contrôler le drone 12 et au moins un capteur d'images 22 configuré pour observer un motif d'observation 24 dans la région géographique 16.

Chaque drone 12 comprend par exemple en outre un dispositif de localisation par exemple du type GNSS (de l'anglais « Global Navigation Satellite System » pour « Système mondial de navigation par satellites »), configuré pour déterminer une position du drone 12. Selon un exemple, le dispositif de localisation est intégré dans le contrôleur 20. Selon un autre exemple, le dispositif de localisation est embarqué dans le drone 12, et distinct du contrôleur 20.

Selon un exemple, chaque drone 12 comprend en outre au moins un dispositif de communication 26 configuré pour communiquer avec les autres drones 12 et/ou avec une station de contrôle, non représentée. Le dispositif communication 26 est par exemple configuré pour mettre en oeuvre une communication selon un ou plusieurs protocoles différents, tels que μTMA, 5G et Wifi.

Chaque drone 12 comprend par exemple un système de détection et d'évitement d'obstacle configuré pour détecter et éviter des obstacles détectés, un système d'anticollision configuré pour éviter des collisions avec les autres drones 12 ou d'autres aéronefs, et/ou un système d'asservissement à une altitude par rapport au sol, configuré pour mettre en outre un vol du type « suivi de terrain » du drone 12. Le ou chaque système parmi le système de détection et d'évitement d'obstacle, le système d'anticollision et/ou le système d'asservissement est par exemple intégré dans le contrôleur 20 ou forme, en variante, un système embarqué distinct du contrôleur 20.

Chaque drone 12 comprend par exemple en outre un boîtier 28, notamment configuré pour permettre la fixation ou l'attachement du dispositif de propulsion 18, du capteur d'images 22 et du dispositif de communication 26, et pour recevoir dans un espace intérieur le contrôleur 20.

Lorsque l'ensemble 10 comprend plusieurs drones 12, chaque drone 12 est de préférence au moins partiellement identique l'un par rapport à l'autre. En particulier, chaque drone 12 comprend les mêmes composants ou des composants similaires. En variante, les drones 12 comprennent des composants différents.

Dans l'exemple de la figure 1, chaque contrôleur 20 est embarqué dans un drone 12 respectif. En variante non représentée, le ou chaque contrôleur 20 est embarqué dans la station de contrôle distant du drone 12. Dans ce cas, la station de contrôle comprenant le ou chaque contrôleur 20 est par exemple positionnée au sol. Selon un autre exemple ou en complément, la station de contrôle est embarquée dans un véhicule terrestre, un navire ou un aéronef.

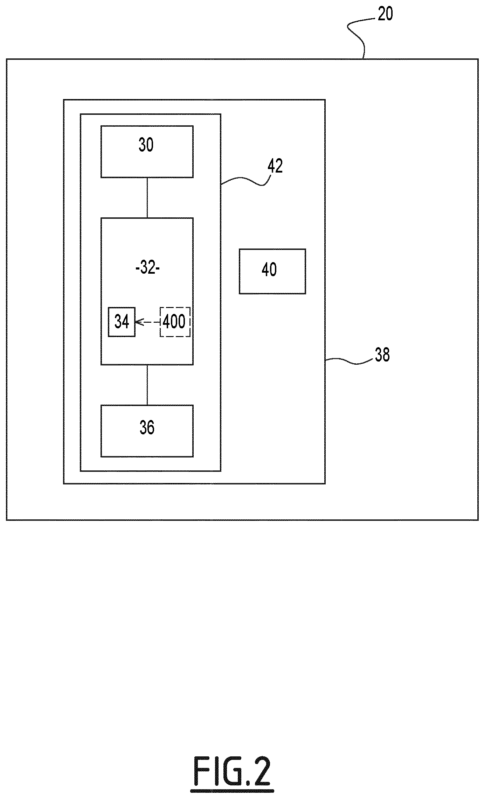

En référence à la figure 2, le contrôleur 20 comprend par exemple un module de réception 30 configuré pour recevoir plusieurs cartes, une information de drone et/ou une information de convoi, un module de traitement 32 configuré pour déterminer au moins une commande pour le drone 12 et un module de commande 36 configuré pour commander le drone 12.

Le contrôleur 20 comprend par exemple en outre, non représenté, des dispositifs d'interface configurés pour échanger des données, des signaux et/ou des commandes avec les autres éléments du drone 12, par exemple avec le dispositif de propulsion 18, avec le capteur d'images 22 et avec le dispositif de communication 26.

Le module de traitement 32 du contrôleur 20 comprend au moins un réseau de neurones artificiels 34 configuré pour recevoir en entrée des variables d'état comprenant au moins certaines des cartes, l'information de drone et en complément optionnel l'information de convoi. Le réseau de neurones artificiels 34 est en outre configuré pour fournir en sortie la commande de déplacement du drone 12 et/ou de positionnement du capteur d'images 22. Le réseau de neurones artificiels 34 est appelé réseau de neurones ci-après.

Le module de réception 30, le module de traitement 32 et le module de commande 36 sont chacun par exemple intégrés dans au moins un calculateur 38.

Dans ce cas, chacun des modules parmi le module de réception 30, le module de traitement 32 et le module de commande 36 se présente au moins partiellement sous la forme d'un logiciel exécutable par un processeur 40 et stocké dans une mémoire 42 du calculateur 38.

En variante ou en complément, chacun des modules parmi le module de réception 30, le module de traitement 32 et le module de commande 36 est intégré, au moins partiellement, dans un dispositif physique, tel que par exemple un circuit logique programmable, tel qu'un FPGA (de l'anglais « Field Programmable Gate Array »), ou encore sous la forme d'un circuit intégré dédié, tel qu'un ASIC (de l'anglais « Application Specific Integrated Circuit »).

Le capteur d'images 22 est de préférence apte à modifier le motif d'observation 24 par rotation du capteur d'images 22 par rapport à un boîtier 28 du drone 12. En particulier, comme illustré par exemple sur la figure 1, le capteur d'images 22 est muni d'un moteur de pivotement 44 configuré pour modifier une orientation du capteur d'images 22 par rapport au boîtier 28. Le capteur d'images 22 est ainsi en particulier apte à prendre des images de zones différentes à partir d'une même position du drone 12, et en particulier apte à changer le motif d'observation 24, en pivotant le capteur d'images 22 par rapport au boîtier 28.

En variante ou complément non représentée, le capteur d'images 22 est muni d'un contrôle numérique apte à modifier le motif d'observation 24 du capteur d'images 22, notamment indépendamment d'une orientation du capteur d'images 22 lui-même.

Selon un exemple, le capteur d'images 22 est apte à modifier le motif d'observation 24 par agrandissement, aussi appelé zoom, d'une partie de la région couverte par le motif d'observation 24 et/ou par réduction, aussi appelé dé-zoom, de la partie de la région couverte par le motif d'observation 24.

Le capteur d'images 22 comprend par exemple une caméra, en particulier une caméra optique, et/ou un capteur infrarouge. En complément optionnel ou en variante, le capteur d'images 22 comprend un radar ou lidar. Le capteur d'images 22 est par exemple muni d'un dispositif de traitement d'images apte à classer des objets détectés, par exemple par un traitement mettant en oeuvre un apprentissage automatique. Par exemple, le dispositif de traitement est configuré pour configuré pour détecter des véhicules ou la présence de personnes dans chaque image prise par le capteur d'images 22. Selon un autre exemple, un tel dispositif de traitement est intégré le contrôleur 20. Selon un autre exemple, le dispositif de traitement d'images est embarqué dans le drone 12 et distinct du contrôleur 20 ou est embarqué dans la station de contrôle, non représentée, à distance du drone 12.

En référence à la figure 1, le convoi de véhicules 14 comprend par exemple un ou au moins deux véhicules, telles que des véhicules terrestres. Selon une alternative ou en complément, le convoi de véhicules 14 comprend au moins un véhicule ainsi que des piétons. En particulier, le ou chaque drone 12 est configuré pour surveiller la région géographique 16 dans lequel le convoi de véhicules 14 est susceptible d'évoluer.

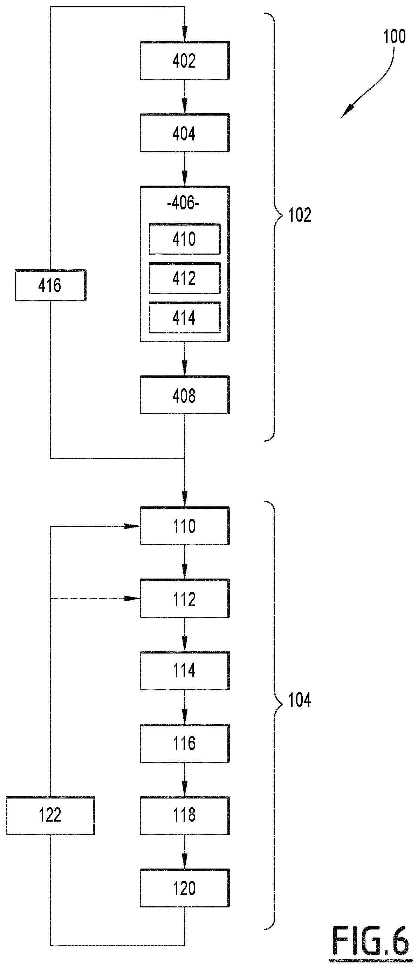

Un procédé de contrôle 100 du ou des drone(s) 12 va maintenant être décrit, en référence à la figure 6. Ce procédé est mis en oeuvre par le ou chaque drone 12, et en particulier par le ou chaque contrôleur 20.

Le procédé de contrôle 100 comprend une phase d'apprentissage 102 et une phase d'exploitation 104.

La phase d'exploitation 104 comprend par exemple une étape d'obtention 110 d'une carte d'observation 200, une première étape de réception 112, une seconde étape de réception 114, une troisième étape de réception 116, une étape de détermination 118 et une étape de commande 120.

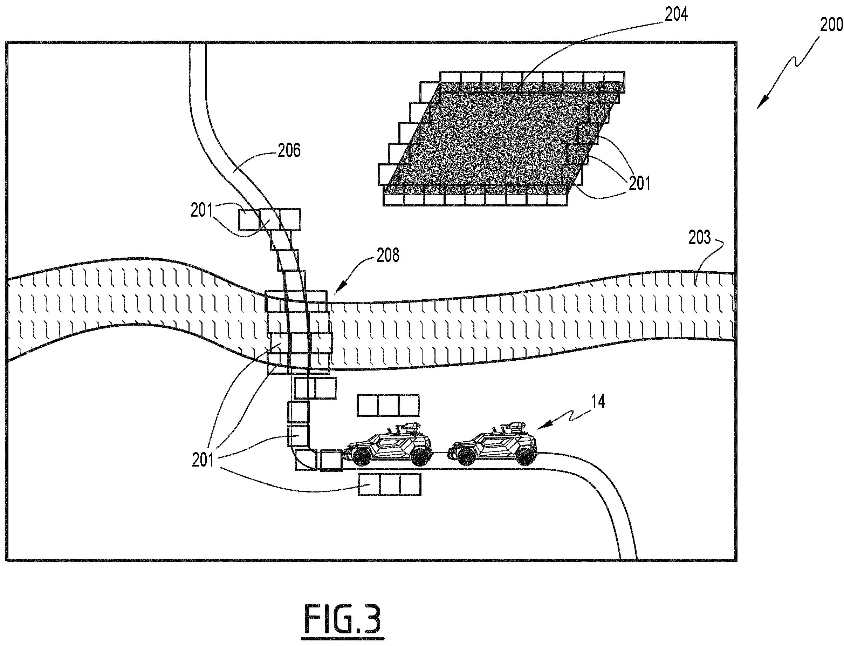

Lors de l'étape d'obtention 110, le contrôleur 20 obtient la carte d'observation 200, dont un exemple est illustré sur la figure 3.

La carte d'observation 200 définit une partie ou une fraction de zones géographiques de la région géographique 16 comme des zones à observer 201 par au moins l'un des drones 12, également appelées cellules à observer. En particulier, la région géographique 16 comprend plusieurs zones géographiques, et la carte d'observation 200 définit une sélection de certaines de ces zones géographiques, à savoir ces zones à observer.

Par exemple, lors de l'étape d'obtention 110, le contrôleur 20 obtient la carte d'observation 200 en fonction d'une carte de terrain prédéterminée, non représentée, comprenant la pluralité de zones géographiques de la région géographique 16, et en fonction d'une liste prédéterminée d'éléments à observer.

La carte de terrain prédéterminée comprend notamment l'ensemble de zones géographiques, par exemple arrangées selon une grille régulière.

La carte de terrain prédéterminée est par exemple de type 2,5D. A titre d'exemple, la carte de terrain prédéterminée de type 2,5D est une carte 2D (deux dimensions) non plate, qui suit des déformations du terrain dues à l'altitude du sol. En particulier, la carte de terrain prédéterminée définit, pour chaque zone géographique, une largeur et longueur avec des positions géographiques associées, ainsi qu'une seule altitude par zone géographique. L'altitude est par exemple l'altitude du sol, d'une hauteur maximale d'un bâtiment dans la zone géographique ou d'une hauteur maximale d'un arbre dans la zone géographique. Selon un exemple, chaque zone géographique présente une longueur et une largueur comprise en 5m et 10m.

La liste prédéterminée d'éléments à observer comprend par exemple plusieurs éléments présentant un intérêt pour une observation. Par exemple, la liste prédéterminée d'éléments comprend, en référence à la figure 3, le convoi de véhicules 14, une fleuve 203, une forêt 204, une route 206 avec un pont 208.

Lors de l'étape d'obtention 110, le contrôleur 20 sélectionne ainsi en particulier certaines des zones géographiques, et les définit comme les zones à observer 201. A titre d'illustration, le contrôleur 20 sélectionne les zones sur la lisière de la forêt 204, au moins certaines zones de la route 206, autour du pont 208 et autour du convoi de véhicules 14 comme les zones à observer 201.

Selon une variante de l'étape d'obtention 110, la carte d'observation 200 est mémorisée dans une mémoire. En particulier, la carte d'observation 200 est prédéterminée, par exemple par un opérateur, ou par un dispositif ou calculateur non représenté. Dans ce cas, l'étape d'obtention 110 de la carte d'observation 200 comprend la transmission de la carte d'observation 200 au calculateur 38, notamment au module de réception 30.

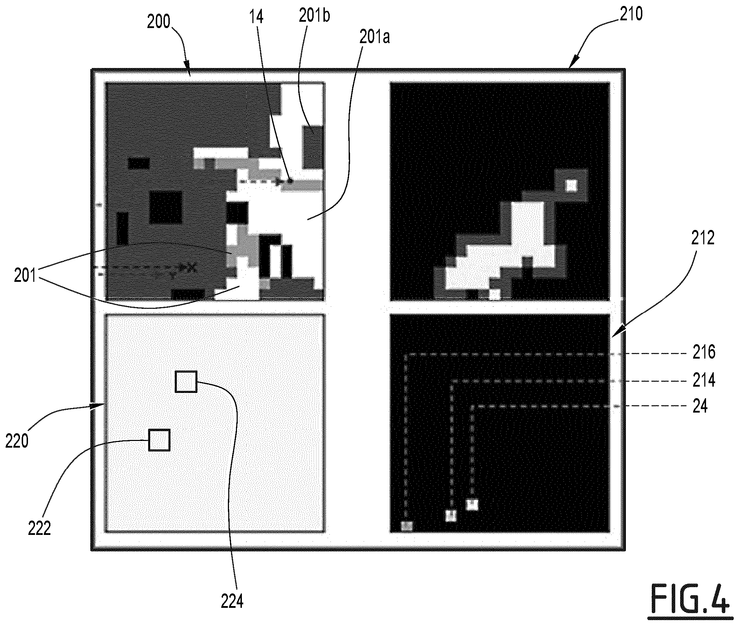

Un autre exemple de la carte d'observation 200 est illustré sur la figure 4. Par exemple, chaque zone à observer est doté d'une valeur d'importance d'observation, par exemple compris entre 0 et 1. Dans la représentation de la figure 4, la zone à observer 201 est plus claire si la valeur est plus élevée. Lorsque la valeur d'importance d'observation est égale à 1, la zone à observer 201, dénommée zone importante 201a, est très importante par exemple pour une mission. Lorsque la valeur est proche de 0, par exemple égale à 0,1, la zone à observer 201, dénommée zone peu importante 201b, est moins importante pour la mission. Par exemple, la valeur d'importance d'observation dépend d'une position du convoi de véhicules 14.

Lors de la première étape de réception 112, le contrôleur 20 reçoit une carte d'éclairage 210. La carte d'éclairage 210 est par exemple mémorisée dans une partie de la mémoire 42 du calculateur 38, et transmise au module de réception 30 lors de la première étape de réception 112.

La carte d'éclairage 210 comprend, pour chaque zone à observer 201, un état d'observation par le drone 12.

L'état d'observation est par exemple une valeur, pour chaque zone à observer 201, bornée entre 0 et 1. Lorsqu'une zone à observer 201 a été observée complètement par le drone 12, la valeur est par exemple égale à 1. Lorsque zone à observer 201 n'a pas du tout été observée par le drone 12, la valeur est égale à 0.

L'état d'observation d'une zone à observer 201 indique en particulier si le motif d'observation 24 du capteur d'images 22 couvre, ou a couvert dans une itération précédente, la zone à observer 201 partiellement ou complètement.

Le motif d'observation 24 correspond par exemple à une image prise par le capteur d'images 22 à un instant donné, comprenant de préférence des zones au sein de l'image qui sont associées à des valeurs d'intensité d'observation. Par exemple, une zone centrale de l'image, tel qu'un cercle de diamètre prédéterminé, est associée à une valeur d'intensité d'observation forte. Par exemple, des zones périphériques de l'image sont associées à des valeur d'intensité d'observation plus faibles que la valeur d'intensité d'observation forte. Les zones périphériques forment par exemple des cercles périphériques autour de la zone centrale. La zone centrale comprend par exemple un point focal du capteur d'images 22.

Selon un exemple, le motif d'observation 24 est par exemple limité par une distance maximale déterminée à partir du capteur d'images 22 ou autour de la position du drone 12.

Selon un exemple, le contrôleur 20 applique la valeur de l'état d'observation à une loi de décroissance temporelle. Par exemple, la loi de décroissance temporelle réduit la valeur après une période prédéterminée, ou met à 0 la valeur après la période prédéterminée. La période prédéterminée correspond en particulier à une obsolescence d'informations ou d'une situation dans la zone à observer 201. Selon un autre exemple ou en complément optionnel, le contrôleur 20 reçoit une commande de mettre à 0 la valeur d'une zone à observer 201 spécifique. Cela permet ainsi en particulier de forcer le drone 12 à observer la zone à observer 201 de nouveau.

Lors de la seconde étape de réception 114, le contrôleur 20 reçoit l'information de drone. L'information de drone comprend par exemple une position du drone 12, une orientation du capteur d'images 22 et/ou le motif d'observation 24. Selon un exemple, l'information de drone comprend en outre une destination du drone 12.

Par exemple, en référence à la figure 4, l'information de drone se présente sous forme d'une carte d'information de drone 212. Dans ce cas, la carte d'information de drone 212 comprend par exemple la position 214, le motif d'observation 24 et la destination 216 du drone 12. En variante non représentée, l'information de drone se présente forme de valeur scalaires.

Lors de la troisième étape de réception 116, le contrôleur 20 reçoit l'information de convoi comprenant par exemple une position et/ou une destination d'un convoi de véhicules 14.

Selon un exemple, en référence à la figure 4, l'information de convoi se présente sous forme d'une carte de convoi 220, présentant par exemple la même région géographique 16 que la carte de terrain prédéterminée. La carte de convoi 220 comprend en particulier la position 222 et la destination 224 du convoi de véhicules 14. En variante non représentée, l'information de convoi se présente forme de valeurs scalaires.

Lors de l'étape de détermination 118, le contrôleur 20 détermine la commande pour le drone 12 par le réseau de neurones 34.

Le réseau de neurones 34 reçoit en entrée les variables d'état. Les variables d'état comprennent au moins la carte d'observation 200, la carte d'éclairage 210 et l'information de drone.

Le réseau de neurones 34 fournit en sortie la commande de déplacement du drone 12 et/ou de positionnement du capteur d'images 22.

La commande de déplacement du drone 12 comprend notamment une commande de translation et/ou de rotation du drone 12 dans un repère géographique.

La commande de positionnement du capteur d'images 22 comprend notamment une commande de rotation du capteur d'images 22 par rapport au boîtier 28 du drone 12. En variante ou en complément, la commande de positionnement comprend une commande de modification du motif d'observation par agrandissement et/ou réduction d'une zone observée par le capteur d'images 22.

Selon un exemple, le réseau de neurones 34 reçoit en entrée en outre une variable d'état comprenant l'information de convoi. Cela permet en particulier d'augmenter l'observation autour du convoi de véhicules 14.

Selon un exemple, le réseau de neurones 34 reçoit en entrée en outre une variable d'état comprenant une carte de points d'intérêt. Selon un exemple, la carte de points d'intérêt comprend l'information de drone, en particulier des valeurs de la position du drone 12, de la destination du drone 12, et de la position du motif d'observation 24. En variante ou en complément, la carte de points d'intérêt comprend au moins certains éléments de la liste prédéterminée d'éléments à observer, tels que la fleuve 203, la forêt 204, la route 206 et le pont 208.

Selon un exemple, le réseau de neurones 34 reçoit en entrée en outre une variable d'état comprenant une carte d'éclairage par type de terrain, obtenue par multiplication de la carte d'éclairage 210 avec une carte binaire représentant un type de terrain.

La carte binaire indique les zones devant être observées et celles qui ne nécessitent pas d'être observées pour un terrain donné.

Selon un exemple, le réseau de neurones 34 reçoit en entrée en outre une variable d'état comprenant une carte de reste-à-observer comprenant l'ensemble des zones à observer 201 dont l'état d'observation correspond à un état d'observation partielle par le drone 12 ou un état de non-observation par le drone 12.

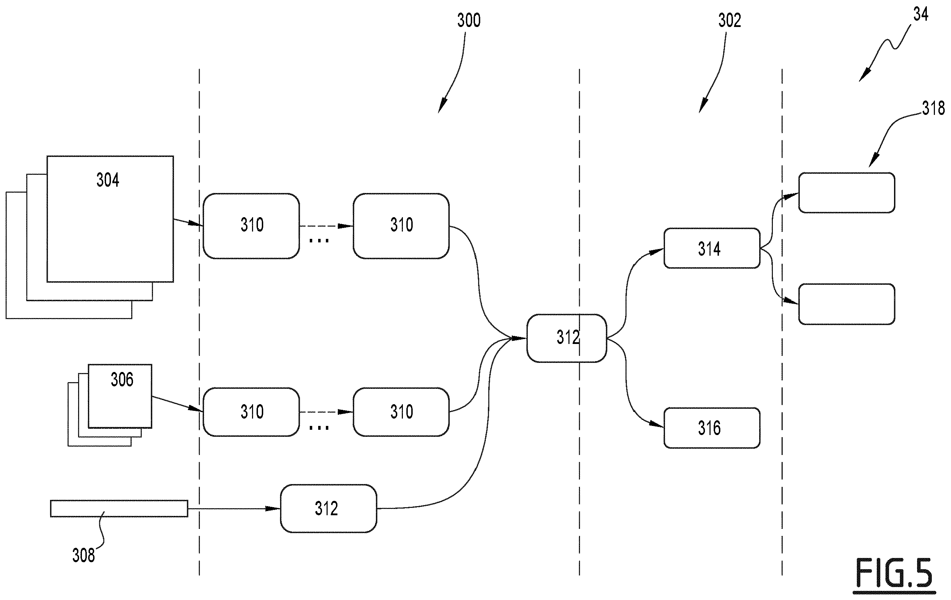

En référence à la figure 5, le réseau de neurones 34 comprend par exemple une partie de perception 300 et une partie de décision 302 suivant la partie de perception 300.

Lors de l'étape de détermination 118, le réseau de neurones 34 reçoit au moins certaines des variables d'état décrites ci-dessus. Les variables d'état sont par exemple reçues par le réseau de neurones 34 sous forme de cartes globales 304 couvrant toute la région géographique 16, sous forme de cartes partielles 306 formant une partie d'une carte globale 304 et/ou sous forme de scalaires 308.

La partie de perception 300 comprend plusieurs blocs de réseau 310, comprenant chacun par exemple un réseau de convolution, ou réseau CNN (de l'anglais « Convolutional Neural Network » pour réseau de neurones à convolution), un nœud d'activation, par exemple du type ReLU, et d'un nœud de pooling. La partie de perception 300 comprend par exemple en outre au moins un bloc de réseau de neurones MLP 312 (de l'anglais « multilayer perceptron » pour perceptron multicouche).

Chaque bloc de réseau 310 et le bloc de réseau de neurones MLP 312 traite les variables d'entrée transmettre des données traitées à la partie de décision 302.

La partie de décision 302 comprend un module acteur 314 et un module appelé critique 316 mettant en oeuvre un apprentissage par renforcement. La partie de décision 302 génère des sorties 318, à savoir la commande de déplacement du drone 12 et/ou de positionnement du capteur d'images 22.

Lors de l'étape de commande 120, le contrôleur 20 commande le déplacement du drone 12 et/ou le positionnement du capteur d'images 22 conformément à la commande. Ainsi, le drone 12 se déplace en particulier à la position de la commande et/ou le capteur d'images 22 pivote conformément à la commande et/ou modifie le motif d'observation 24.

En référence à la figure 6, le procédé comprend par exemple en outre une étape de mise à jour 122.

L'étape de mise à jour 122 est de préférence mise en oeuvre comme suite à une mise en oeuvre de l'étape de commande 120.

Lors de l'étape de mise à jour 122, le contrôleur 20 met à jour au moins la carte d'éclairage 210 et l'information de drone en fonction du déplacement du drone 12 et/ou du positionnement du capteur d'images 22 mis en oeuvre lors de l'étape de commande 120. Le contrôleur 20 obtient ainsi une carte d'éclairage mise à jour et une information de drone mise à jour comprenant notamment la position de drone 12 courante, en particulier après le déplacement du drone 12 selon la commande, et l'orientation du capteur d'images 22 courante et/ou le motif d'observation 24 courant, en particulier après le pivotement du capteur d'images 22 selon la commande.

Selon une variante ou en complément facultatif, la carte d'éclairage 210 est mise à jour en fonction de la présence d'autres drones. Une telle présence est par exemple transmise par communication inter-drone ou relayée par le convoi de véhicules 14. Dans ce cas, par exemple, les états d'observation sont mis à jour pour les zones à observer 201 qui sont couvertes, au moins en partie, par le motif d'observation 24 de l'autre drone ou des autres drones.

Selon une variante ou en complément facultatif, l'état d'observation de certaines zones à observer 201 est mis à zéro, ou mis en état non-éclairé, lors d'une commande de revisite de cette zone à observer 201 par l'opérateur, par exemple présent sur le convoi de véhicules 14 (via communication avec le convoi).

La carte d'éclairage mise à jour est identique à la carte d'éclairage 210 reçue lors de la première étape de réception 112, à l'exception du ou des états d'observation de chaque zone à observer 201 qui est couverte, lors de l'étape de commande 120, au moins partiellement par le motif d'observation 24 du drone 12.

Par exemple, le contrôleur 20 modifie l'état d'observation de chaque zone à observer 201 en fonction d'une couverture du motif d'observation 24 de la zone à observer 201 lors de l'étape de commande 120. En particulier, lorsque le motif d'observation 24 couvre, pendant l'étape de commande 120, cette zone partiellement, le contrôleur 20 augmente l'état d'observation d'une première valeur, et lorsque le motif d'observation 24 couvre cette zone entièrement, le contrôleur 20 augmente l'état d'observation d'une seconde valeur plus forte que la première valeur.

Lorsque le procédé comprend l'étape de mise à jour 122, le procédé comprend de préférence en outre une répétition au moins de l'étape de détermination 118, lors de laquelle le réseau de neurones 34 reçoit en entrée au moins la carte d'observation 200, la carte d'éclairage mise à jour et l'information de drone mise à jour.

De préférence, le procédé comprend au moins N répétitions, N étant supérieur à 2, de préférence supérieur à 100.

Selon un exemple, chaque répétition comprend la mise en œuvre, dans cet ordre, de l'étape d'obtention 110, de la première étape de réception 112, de la seconde étape de réception 114, de la troisième étape de réception 116, de l'étape de détermination 118 et de l'étape de commande 120 et éventuellement de l'étape de mise à jour 122, notamment avant une itération suivante. Selon un exemple, uniquement une première mise en œuvre comprend l'étape d'obtention 110, et dans les répétitions suivantes, la carte d'observation 200 reste identique.

La phase d'apprentissage 102 est de préférence mise en œuvre au moins une fois avant une mise en œuvre de la phase d'exploitation 104.

Lors de la phase d'apprentissage 102, le réseau de neurones 34 est entraîné, notamment par apprentissage par renforcement.

En particulier, un agent logiciel 400, illustré en particulier sur la figure 2, entraîne le réseau de neurones 34 par itérations successives pour obtenir, après une ou plusieurs itérations, le réseau de neurones 34 entraîné et prêt pour le contrôle du drone 12. L'agent logiciel 400 étant illustré sur la figure 2 comme faisant partie du contrôleur 20, il est de préférence uniquement présent lors de la phase d'apprentissage 102. En particulier, il est uniquement embarqué dans le contrôleur 20 ou dans un autre calculateur distinct du contrôleur 20 lors de la phase d'apprentissage 102.

Par exemple, la phase d'apprentissage 102 est mise en œuvre au moins partiellement, de préférence entièrement, par un calculateur distinct du contrôleur 20. L'agent logiciel 400 se présente par exemple sous forme d'une brique logicielle, exécutable par le processeur 40 et stocké dans la mémoire 42 du calculateur 38 lors de la phase d'apprentissage 102.

L'agent logiciel 400 ne comprend pas, de préférence, un modèle prédéterminé, mais met en œuvre des actions sur la base d'une stratégie selon laquelle l'agent logiciel 400 apprend une fonction associant un état actuel à une action à effectuer. Une telle approche est aussi appelée « model-free » (de l'anglais « sans modèle ») dans le cadre de l'apprentissage par renforcement.

Par « état actuel », il est entendu dans la présente description en particulier un état courant, lors d'une itération actuelle, des variables d'état reçues en entrée du réseau de neurones 34 lors de la phase d'exploitation 104. En particulier, l'état actuel comprend au moins la carte d'observation 200, la carte d'éclairage 210, l'information de drone, et en complément optionnel l'information de convoi.

L'action mis en œuvre par l'agent logiciel 400 comprend par exemple la commande de déplacement du drone 12 et/ou la commande de positionnement du capteur d'images 22.

De préférence, l'agent logiciel 400 met en œuvre l'apprentissage du réseau de neurones 34 en calculant et optimisant un gain G convergeant, en particulier maximisant l'espérance du gain G, pour entraîner le réseau de neurones 34. Le gain G est notamment déterminé selon l'équation suivante :

$$G_t = \sum_{k=0}^{\infty} \gamma^k r_{t+k+1}$$

où :

    $r_t$ est la récompense reçue à l'instant t
    $\gamma \in [0,1]$ est un facteur de réduction pénalisant les récompenses à venir.

Selon un exemple, l'agent logiciel 400 met en œuvre un processus de décision markovien, également appelé MDP (de l'anglais « Markov Decision Process »), ou un processus de décision markovien partiellement observable, également appelé POMDP (de l'anglais « Partially Observable Markov Decision Process »).

Selon un exemple, la phrase d'apprentissage 102 comprend un algorithme de la classe d'algorithmes de « Temporal Difference (TD) learning » (nom signifiant littéralement Apprentissage par différence temporelle).

Par exemple, l'agent logiciel 400 met en œuvre pour l'apprentissage un ou plusieurs des algorithmes parmi l'algorithme « DQN », ou « Deep Q Network » et un algorithme selon une approche dite « actor-critic » comprenant un acteur modélisant une fonction politique et un paramètre dit critique estimant une pertinence de modifications et indiquant une direction d'optimisation de l'acteur.

Lorsque l'agent logiciel 400 met en œuvre un algorithme selon l'approche dite « actor-critic », il met en œuvre par exemple l'algorithme « PPO » (de « Proximal Policy Optimization »), l'algorithme « DDPG » (de « Deep Deterministic Policy Gradient »), en particulier « TD3 » (de « Twin Delayed DDPG »), ou l'algorithme « SAC » (de « Soft Actor Critic »), ce dernier comprenant en particulier une modélisation stochastique, et incluant une modélisation d'une entropie dans un objectif calculé.

Selon un exemple, la phase d'apprentissage 102 comprend en outre un entraînement avec plusieurs agents logiciels 400 parallèlement pour obtenir des paramètres permettant à l'un des algorithmes précités d'obtenir une convergence.

Selon un exemple, la phase d'apprentissage 102 comprend la mise en oeuvre d'une approche PBT (de « Population Based Training » pour entraînement basé sur la population) pour obtenir des hyper-paramètres.

Selon un exemple, et en référence à la figure 6, la phase d'apprentissage 102 comprend une étape de détermination 402 d'une action par l'agent logiciel 400, une étape d'application 404 de l'action, une étape d'élaboration 406, et une étape de transmission 408.

Lors de l'étape de détermination 402, l'agent logiciel 400 détermine l'action. Par exemple, l'agent logiciel 400 détermine des commandes ou consignes. Selon un exemple, l'étape de détermination 402 comprend le calcul d'indicateurs auxiliaires et/ou d'une normalisation de variables en vue d'une application au réseau de neurones 34. A titre d'exemple, l'action comprend la commande de déplacement du drone 12, la commande de positionnement du capteur d'images 22, et/ou un déplacement du convoi.

Lors de l'étape d'application 404, l'agent logiciel 400 applique l'action, en particulier la commande. A titre d'exemple, l'information de drone est modifiée comme suite au déplacement du drone 12. Par exemple, la carte d'éclairage 210 est modifiée, en particulier l'état d'observation de chaque zone à observer 201 qui est au moins partiellement couverte par le motif d'observation 24 du capteur d'images 22 lors de l'application de la commande.

Lors de l'étape d'élaboration 406, par exemple un interpréteur, non représenté, détermine une récompense pour l'agent logiciel 400 et un nouvel état comprenant les variables d'état modifiées lors de l'étape d'application 404. L'interpréteur se présente par exemple sous forme d'une brique logicielle, exécutable par le processeur 40 et stocké dans la mémoire 42 du calculateur 38 lors de la phase d'apprentissage 102.

Par exemple, l'interpréteur met en oeuvre, lors de l'étape d'élaboration 406, une première sous-étape 410, une seconde sous-étape 412 et une troisième sous-étape 414 pour obtenir la récompense.

Lors de la première sous-étape 410, l'interpréteur détermine une carte de progrès d'éclairage correspondant à une différence de la carte d'éclairage 210 d'une itération courante et la carte d'éclairage 210 d'une itération précédente, c'est-à-dire notamment d'une itération précédant directement l'itération courante. La carte de progrès d'éclairage comprend en particulier les différences des états d'observation des zones à observer 201.

Lors de la seconde sous-étape 412, l'interpréteur multiplie la carte d'observation 200 avec la carte de progrès d'éclairage pour obtenir une carte de récompense. En particulier, l'interpréteur multiplie, zone par zone, l'état de chaque zone de la carte de progrès d'éclairage avec la carte d'observation 200.

Lors de la troisième sous-étape 414, l'interpréteur obtient la récompense, par exemple une valeur scalaire, par application d'une fonction prédéterminée sur la carte de récompense.

L'interpréteur applique la fonction prédéterminée en particulier sur l'ensemble des zones de la carte de récompense, notamment sur une valeur de l'état d'observation associée à chaque zone de carte de récompense. La fonction prédéterminée est par exemple une somme ou une moyenne des valeurs des zones de la carte de récompense.

Selon un exemple, l'interpréteur obtient la récompense en outre en fonction des variables d'état reçues par le réseau de neurones 34 en entrée lors de la phase d'exploitation 104, comprenant par exemple l'information de convoi et/ou la carte de points d'intérêt.

Lors de l'étape de transmission 408, l'interpréteur transmet la récompense et le nouvel état à l'agent logiciel 400.

L'étape de détermination 402, l'étape d'application 404, l'étape d'élaboration 406, et l'étape de transmission 408 sont de préférence mises en œuvre dans cet ordre.

L'étape de détermination 402, l'étape d'application 404, l'étape d'élaboration 406, et l'étape de transmission 408 sont de préférence mises en œuvre plusieurs fois, afin d'obtenir le réseau de neurones 34 entraîné.

En particulier, en référence à la figure 6, la phase d'apprentissage 102 comprend en outre une étape de modification 416, mise en œuvre par exemple comme suite à une mise en œuvre de l'étape de transmission 408 et avant une mise en œuvre de l'étape de détermination 402 d'une itération suivante.

L'étape de modification 416 modifie le réseau de neurones 34 à partir de données d'interaction collectées, telles que par exemple les variables d'état, la ou les actions(s) et/ou la récompense. En particulier, la récompense est optimisée par une fonction de perte ou de coût d'un algorithme d'apprentissage par renforcement, tel que par exemple l'algorithme « DQN », l'algorithme « PPO », l'algorithme « DDPG », et/ou l'algorithme « SAC ». Cela permet en particulier de prendre de meilleures actions, de manière itérative.

Le procédé de contrôle 100 est par exemple mis en œuvre pour un seul drone 12 et/ou par un seul contrôleur 20.

En variante, le procédé de contrôle 100 comprend le contrôle du plusieurs drones 12 comprenant chacun au moins un capteur d'images 22 configuré pour observer un motif d'observation 24 respectif.

Selon un exemple, le contrôleur 20 est un contrôleur centralisé contrôlant plusieurs drones 12. En variante, chaque drone 12 comprend son propre contrôleur 20.

De préférence, le procédé de contrôle 100 comprend le contrôle du plusieurs drones 12, comprenant chacun au moins un capteur d'images 22 configuré pour observer un motif d'observation respectif 24.

Selon un exemple, le contrôleur 20 est entraîné par le principe de CTDE (de l'anglais « Centralized Training for Decentralized Execution » pour entraînement centralisé pour une exécution décentralisée). Par exemple, le contrôleur 20 est entraîné en modélisant plusieurs drones 12, mais lors de la phase d'exploitation 104, chaque drone 20 est contrôlé de manière indépendante, tout en recevant notamment des états des autres drones 12.

## Revendications

1. Procédé de contrôle (100) d'au moins un drone (12) comprenant au moins un capteur d'images (22) configuré pour observer un motif d'observation (24), le procédé de contrôle (100) comprenant une phase d'exploitation (104), comprenant des étapes de :

   - obtention (110) d'une carte d'observation (200) pour une région (16) comprenant une pluralité de zones géographiques, la carte d'observation (200) définissant une partie des zones géographiques de la région (16) comme des zones à observer (201) ;
   - réception (112) d'une carte d'éclairage (210), comprenant, pour chaque zone à observer (201), un état d'observation par le drone (12) ;
   - réception (114) d'une information de drone relative à une position du drone (12) et/ou une orientation du capteur d'images (22) ;
   - détermination (118) d'au moins une commande pour le drone (12) par au moins un réseau de neurones (34), le réseau de neurones (34) recevant en entrée des variables d'état comprenant au moins la carte d'observation (200), la carte d'éclairage (210) et ladite information de drone, le réseau de neurones (34) fournissant en sortie au moins une commande de déplacement du drone (12) et/ou de positionnement du capteur d'images (22),

le procédé de contrôle comprenant en outre une phase d'apprentissage (102) du réseau de neurones (34), lors de laquelle le réseau de neurones (34) est entraîné par apprentissage par renforcement, dans lequel la phase d'apprentissage (102) comprend une étape d'élaboration (406) d'une récompense pour un agent logiciel (400) en fonction d'une carte de récompense, l'étape de d'élaboration (406) comprenant :

- une première sous-étape (410) de détermination d'une carte de progrès d'éclairage correspondant à une différence de la carte d'éclairage (210) d'une itération courante et la carte d'éclairage (210) d'une itération précédente ;
- une seconde sous-étape (412) de détermination de la carte de récompense, par multiplication de la carte d'observation (200) avec la carte de progrès d'éclairage ;
- une troisième sous-étape (414) d'obtention de la récompense par application d'une fonction prédéterminée sur la carte de récompense.

2. Procédé de contrôle (100) selon la revendication 1, dans lequel le capteur d'images (22) est apte à modifier le motif d'observation (24) par rotation du capteur d'images (22) par rapport à un boîtier (28) du drone (12), par agrandissement d'une partie de la région (16) couverte par le motif d'observation (24) et/ou par réduction de la partie de la région (16) couverte par le motif d'observation (24).

3. Procédé de contrôle (100) selon la revendication 1 ou la revendication 2, comprenant en outre une étape de commande (120) comprenant un déplacement du drone (12) et/ou un positionnement du capteur d'images (22) conformément à la commande.

4. Procédé de contrôle (100) selon la revendication 3, comprenant en outre une étape de mise à jour (122) de la carte d'éclairage (210) et de l'information de drone en fonction du déplacement du drone (12) et/ou du positionnement du capteur d'images (22), pour obtenir une carte d'éclairage mise à jour et une information de drone mise à jour, le procédé de contrôle (100) comprenant en outre une répétition de l'étape de détermination (118), lors de laquelle le réseau de neurones (34) reçoit en entrée au moins la carte d'observation (200), la carte d'éclairage mise à jour et ladite information de drone mise à jour.

5. Procédé de contrôle (100) selon la revendication 4, dans lequel lors de l'étape de mise à jour (122), l'état d'observation de chaque zone à observer (201) est modifié lorsque le motif d'observation (24) couvre, pendant l'étape de commande (120), cette zone à observer (201) au moins partiellement, de préférence entièrement.

6. Procédé de contrôle (100) selon l'une quelconque des revendications précédentes, dans lequel l'étape d'obtention (110) comprend l'obtention de la carte d'observation (200) en fonction d'une carte de terrain prédéterminée comprenant la pluralité de zones géographiques de la région (16) et en fonction d'une liste prédéterminée d'éléments à observer.

7. Procédé de contrôle (100) selon l'une quelconque des revendications précédentes, dans lequel le réseau de neurones (34) reçoit en entrée les variables d'état comprenant en outre au moins une des cartes parmi :

- une carte de points d'intérêt comprenant des valeurs d'une position du drone (12), d'une destination du drone (12), et d'une position du motif d'observation (24) ;
- une carte d'éclairage par type de terrain, obtenue par multiplication de la carte d'éclairage (210) et d'une carte binaire représentant un type de terrain ;
- une carte de reste-à-observer comprenant l'ensemble des zones à observer (201) dont l'état d'observation correspond à un état d'observation partielle par le ou chaque drone (12) ou un état de non-observation par le ou chaque drone (12).

8. Procédé de contrôle (100) selon l'une quelconque des revendications précédentes, dans lequel le réseau de neurones (34) reçoit en entrée les variables d'état comprenant en outre une information de convoi comprenant une position et/ou une destination d'un convoi de véhicules (14).

9. Procédé de contrôle (100) selon l'une quelconque des revendications précédentes, dans lequel, lors de l'étape d'élaboration (406), la récompense est élaborée en outre en fonction d'au moins d'une partie des variables d'état reçues par le réseau de neurones (34) en entrée lors de la phase d'exploitation (104).

10. Contrôleur (20) d'au moins un drone (12) comprenant au moins un capteur d'images (22) configuré pour observer un motif d'observation (24), le contrôleur (20) comprenant un module de réception (30) configuré pour recevoir une carte d'observation (200) pour une région (16) comprenant une pluralité de zones géographiques, la carte d'observation (200) définissant une partie des zones géographiques de la région (16) comme des zones à observer (201), le module de réception (30) étant en outre configuré pour recevoir une carte d'éclairage (210), comprenant, pour chaque zone à observer (201), un état d'observation par le drone (12), le module de réception (30) étant en outre configuré pour recevoir une information de drone relative à une position du drone (12) et/ou une orientation du capteur d'images (22),

le contrôleur (20) comprenant en outre un module de traitement (32) configuré pour déterminer au moins une commande pour le drone (12), dans lequel le module de traitement (32) comprend au moins un réseau de neurones (34) configuré pour recevoir en entrée des variables d'état comprenant au moins la carte d'observation (200), la carte d'éclairage (210) et ladite information de drone, et configuré pour fournir en sortie au moins une commande de déplacement du drone (12) et/ou de positionnement du capteur d'images (22), le réseau de neurones ayant été entraîné lors d'une phase d'apprentissage, lors de laquelle le réseau de neurones est entraîné par apprentissage par renforcement, la phase d'apprentissage (102) comprenant une étape d'élaboration (406) d'une récompense pour un agent logiciel (400) en fonction d'une carte de récompense, l'étape de d'élaboration (406) comprenant :

- une première sous-étape (410) de détermination d'une carte de progrès d'éclairage correspondant à une différence de la carte d'éclairage (210) d'une itération courante et la carte d'éclairage (210) d'une itération précédente ;
- une seconde sous-étape (412) de détermination de la carte de récompense, par multiplication de la carte d'observation (200) avec la carte de progrès d'éclairage ;
- une troisième sous-étape (414) d'obtention de la récompense par application d'une fonction prédéterminée sur la carte de récompense.

**Patentansprüche**

1. Steuerungsverfahren (100) mindestens einer Drohne (12), umfassend mindestens einen Bildsensor (22), der konfiguriert ist, um ein Beobachtungsmuster (24) zu beobachten, das Steuerungsverfahren (100) umfassend eine Betriebsphase (104), umfassend die folgenden Schritte:

- Erlangen (110) einer Beobachtungskarte (200) für eine Region (16), umfassend eine Vielzahl von geografischen Gebieten, wobei die Beobachtungskarte (200) einen Teil der geografischen Gebiete der Region (16) als zu beobachtende Gebiete (201) definiert;
- Empfangen (112) einer Beleuchtungskarte (210), umfassend, für jeden zu beobachtenden Bereich (201), einen Beobachtungszustand durch die Drohne (12);
- Empfangen (114) von Drohneninformationen in Bezug auf eine Position der Drohne (12) und/oder einer Ausrichtung des Bildsensors (22);
- Bestimmen (118) mindestens eines Befehls für die Drohne (12) durch mindestens ein neuronales Netz (34), wobei das neuronale Netz (34) als Eingang Zustandsvariablen empfängt, umfassend mindestens die Beobachtungskarte (200), die Beleuchtungskarte (210) und die Drohneninformationen, wobei das neuronale Netz (34) als Ausgang mindestens einen Befehl zum Bewegen der Drohne (12) und/oder zum Positionieren des Bildsensors (22) bereitstellt,

das Steuerungsverfahren ferner umfassend eine Lernphase (102) des neuronalen Netzes (34), in der das neuronale Netz (34) durch verstärkendes Lernen trainiert wird, wobei die Lernphase (102) einen Schritt eines Erstellens (406) einer Belohnung für einen Softwareagenten (400) abhängig von einer Belohnungskarte umfasst, der Schritt eines Erstellens (406) umfassend:

- einen ersten Teilschritt (410) eines Bestimmens einer Beleuchtungsfortschrittskarte, die einer Differenz der Beleuchtungskarte (210) einer aktuellen Iteration und der Beleuchtungskarte (210) einer vorherigen Iteration entspricht;
- einen zweiten Teilschritt (412) eines Bestimmens der Belohnungskarte, durch Multiplizieren der Beobachtungskarte (200) mit der Beleuchtungsfortschrittskarte;
- einen dritten Teilschritt (414) zum Erlangen der Belohnung durch Anwenden einer vorbestimmten Funktion auf die Belohnungskarte.

2. Steuerungsverfahren (100) nach Anspruch 1, wobei der Bildsensor (22) geeignet ist, um das Beobachtungsmuster (24) durch Drehen des Bildsensors (22) in Bezug auf ein Gehäuse (28) der Drohne (12), durch Vergrößern eines Teils der Region (16), der von dem Beobachtungsmuster (24) abgedeckt wird, und/oder durch Verkleinern des Teils der Region (16), der von dem Beobachtungsmuster (24) abgedeckt wird, zu ändern.

3. Steuerungsverfahren (100) nach Anspruch 1 oder 2, ferner umfassend einen Steuerungsschritt (120), umfassend eine Bewegung der Drohne (12) und/oder eine Positionierung des Bildsensors (22) entsprechend dem Befehl.

**4.** Steuerungsverfahren (100) nach Anspruch 3, ferner umfassend einen Schritt eines Aktualisierens (122) der Beleuchtungskarte (210) und der Drohneninformationen abhängig von der Bewegung der Drohne (12) und/oder der Positionierung des Bildsensors (22), um eine aktualisierte Beleuchtungskarte und aktualisierte Drohneninformationen zu erlangen, das Steuerungsverfahren (100) ferner umfassend eine Iteration des Bestimmungsschritts (118), bei dem das neuronale Netz (34) als Eingang zumindest die Beobachtungskarte (200), die aktualisierte Beleuchtungskarte und die aktualisierten Drohneninformationen erhält.

**5.** Steuerungsverfahren (100) nach Anspruch 4, wobei bei dem Aktualisierungsschritt (122) der Beobachtungsstatus jedes zu beobachtenden Bereichs (201) geändert wird, wenn das Beobachtungsmuster (24) während des Steuerungsschritts (120) diesen zu beobachtenden Bereich (201) zumindest teilweise, vorzugsweise vollständig, abdeckt.

**6.** Überwachungsverfahren (100) nach einem der vorherigen Ansprüche, wobei der Erlangungsschritt (110) ein Erlangen der Beobachtungskarte (200) basierend auf einer vorbestimmten Geländekarte, umfassend die Vielzahl von geografischen Gebieten der Region (16), und abhängig von einer vorbestimmten Liste von zu beobachtenden Elementen umfasst.

**7.** Steuerungsverfahren (100) nach einem der vorherigen Ansprüche, wobei das neuronale Netz (34) als Eingang die Zustandsvariablen erhält, ferner umfassend mindestens eine der Karten von:

- eine Karte von Punkten von Interesse, umfassend Werte einer Position der Drohne (12), eines Ziels der Drohne (12) und einer Position des Beobachtungsmusters (24);
- eine Beleuchtungskarte pro Geländetyp, die durch Multiplizieren der Beleuchtungskarte (210) und einer binären Karte, die einen Geländetyp darstellt, erlangt wird;
- eine Karte für noch zu beobachten, umfassend die Gesamtheit der zu beobachtenden Bereiche (201), deren Beobachtungszustand einem Zustand einer teilweisen Beobachtung durch die oder jede Drohne (12) oder einem Zustand einer Nicht-Beobachtung durch die oder jede Drohne (12) entspricht.

**8.** Steuerungsverfahren (100) nach einem der vorherigen Ansprüche, wobei das neuronale Netz (34) als Eingang die Zustandsvariablen erhält, die zusätzlich Konvoi-Informationen umfassen, die eine Position und/oder ein Ziel eines Konvois von Fahrzeugen (14) umfassen.

**9.** Steuerungsverfahren (100) nach einem der vorherigen Ansprüche, wobei bei dem Erstellungsschritt (406) die Belohnung zusätzlich abhängig von zumindest einem Teil der Zustandsvariablen erstellt wird, die das neuronale Netz (34) während der Betriebsphase (104) als Eingang erhält.

**10.** Steuerung (20) mindestens einer Drohne (12), umfassend mindestens einen Bildsensor (22), der konfiguriert ist, um ein Beobachtungsmuster (24) zu beobachten,
die Steuerung (20) umfassend ein Empfangsmodul (30), das konfiguriert ist, um eine Beobachtungskarte (200) für eine Region (16) zu empfangen, umfassend eine Vielzahl von geografischen Gebieten, wobei die Beobachtungskarte (200) einen Teil der geografischen Gebiete der Region (16) als zu beobachtende Gebiete (201) definiert, wobei das Empfangsmodul (30) ferner konfiguriert ist, um eine Beleuchtungskarte (210) zu empfangen, die für jedes zu beobachtende Gebiet (201) einen Beobachtungszustand durch die Drohne (12) umfasst, wobei das Empfangsmodul (30) ferner konfiguriert ist, um Drohneninformationen in Bezug auf eine Position der Drohne (12) und/oder eine Ausrichtung des Bildsensors (22) zu empfangen,
die Steuerung (20) ferner umfassend ein Verarbeitungsmodul (32), das konfiguriert ist, um mindestens einen Steuerbefehl für die Drohne (12) zu bestimmen, wobei das Verarbeitungsmodul (32) mindestens ein neuronales Netz (34) umfasst, das konfiguriert ist, um als Eingang Zustandsvariablen zu empfangen, die mindestens die Beobachtungskarte (200), die Beleuchtungskarte (210) und die Drohneninformationen umfassen, und konfiguriert ist, um als Ausgang mindestens einen Steuerbefehl zum Bewegen der Drohne (12) und/oder zum Positionieren des Bildsensors (22) bereitzustellen, wobei das neuronale Netz in einer Lernphase trainiert wird, in der das neuronale Netz durch verstärkendes Lernen trainiert wird, die Lernphase (102) umfassend einen Schritt eines Erstellens (406) einer Belohnung für einen Softwareagenten (400) abhängig von einer Belohnungskarte, wobei der Schritt eines Erstellens (406) umfassend:

- einen ersten Teilschritt (410) eines Bestimmens einer Beleuchtungsfortschrittskarte, die einer Differenz der Beleuchtungskarte (210) einer aktuellen Iteration und der Beleuchtungskarte (210) einer vorherigen Iteration entspricht;
- einen zweiten Teilschritt (412) eines Bestimmens der Belohnungskarte, durch Multiplizieren der Beobachtungskarte (200) mit der Beleuchtungsfortschrittskarte;
- einen dritten Teilschritt (414) zum Erlangen der Belohnung durch Anwenden einer vorbestimmten Funktion auf die Belohnungskarte.

**Claims**

1. A method for controlling (100) at least one drone (12) comprising at least one image sensor (22) configured to observe an observation pattern (24), the control method (100) comprising an operating phase (104), comprising the steps of:

   - acquiring (110) an observation map (200) for a region (16) comprising a plurality of geographical zones, the observation map (200) defining part of the geographical zones of the region (16) as zones to observe (201);
   - reception (112) of a lighting map (210), comprising, for each zone to observe (201), a state of observation by the drone (12);
   - reception (114) of drone information relating to a position of the drone (12) and/or an orientation of the image sensor (22);
   - determination (118) of at least one control for the drone (12) by at least one neural network (34), the neural network (34) receiving, as input, state variables comprising at least the observation map (200), the lighting map (210) and said drone information, the neural network (34) providing at the output at least one command for the movement of the drone (12) and/or of the positioning of the image sensor (22),

   the control method further comprising a learning phase (102) of the neural network (34), during which the neural network (34) is trained by reinforcement learning, wherein the learning phase (102) comprises a step of developing (406) a reward for a software agent (400) based on a reward map, the development step (406) comprising:

   - a first sub-step (410) of determination of a lighting progress map corresponding to a difference between the lighting map (210) of a current iteration and the lighting map (210) of a previous iteration;
   - a second sub-step (412) of determination of the reward map, by multiplying the observation map (200) with the lighting progress map;
   - a third sub-step (414) of acquiring the reward by application of a predetermined function to the reward map.

2. The control method (100) according to claim 1, wherein the image sensor (22) is apt to modify the observation pattern (24) by rotating the image sensor (22) with respect to a housing (28) of the drone (12), by enlarging a portion of the region (16) covered by the observation pattern (24) and/or reducing the portion of the region (16) covered by the observation pattern (24).

3. The control method (100) according to claim 1 or claim 2, further comprising a command step (120) comprising a movement of the drone (12) and/or a positioning of the image sensor (22) according to the command.

4. The control method (100) according to claim 3, further comprising a step of updating (122) the lighting map (210) and the drone information according to the movement of the drone (12) and/or the positioning of the image sensor (22), in order to obtain an updated lighting map and an updated drone information, the control method (100) further comprising a repetition of the determination step (118), during which the neural network (34) receives, as input, at least the observation map (200), the updated lighting map and said updated drone information.

5. The control method (100) according to claim 4, wherein during the update step (122), the state of observation of each observation zone (201) is modified when the observation pattern (24) covers the zone to observe (201) at least partially, preferentially entirely, during the command step (120).

6. The control method (100) according to any of the preceding claims, wherein the acquiring step (110) comprises acquiring the observation map (200) based on a predetermined terrain map comprising the plurality of geographic zones of the region (16) and based on a predetermined list of elements to observe.

7. The control method (100) according to any of the preceding claims, wherein the neural network (34) receives as input, the state variables further comprising at least a map among:

   - a map of points of interest comprising values of a position of the drone (12), of a destination of the drone (12), and a position of the observation pattern (24);
   - one lighting map per type of terrain, acquired by multiplying the lighting map (210) and a binary map representing a type of terrain;
   - a remains-to-observe map comprising all the zones to observe (201), the state of observation of which corresponds to a partial state of observation by the or each drone (12) or a non-state of observation by the or each drone (12).

8. The control method (100) according to any of the preceding claims, wherein the neural network (34) receives, as input, the state variables further comprising convoy information comprising a position and/or a destination of a convoy of vehicles (14).

9. The control method (100) according to any of the preceding claims, wherein, during the development step (406), the reward is further developed according to at least a part of the state variables received by the neural network (34) at the input during the operating phase (104).

10. A controller (20) of at least one drone (12) comprising at least one image sensor (22) configured to observe an observation pattern (24),

the controller (20) comprising a reception module (30) configured to receive an observation map (200) for a region (16) comprising a plurality of geographic zones, the observation map (200) defining a portion of the geographical zones of the region (16) as zones to observe (201), the reception module (30) being further configured to receive a lighting map (210), comprising, for each zone to observe (201), a state of observation by the drone (12), the reception module (30) being further configured to receive drone information relating to a position of the drone (12) and/or an orientation of the image sensor (22), the controller (20) further comprising a processing module (32) configured to determine at least one command for the drone (12), wherein the processing module (32) comprises at least one neural network (34) configured to receive, as input, state variables comprising at least the observation map (200), the lighting map (210) and said drone information, and configured to output at least one command for the movement of the drone (12) and/or of the positioning of the image sensor (22), the neural network having been trained during a learning phase, during which the neural network is trained by reinforcement learning, the learning phase (102) comprising a step of developing (406) a reward for a software agent (400) according to a reward map, the development step (406) comprising:

- a first sub-step (410) of determination of a lighting progress map corresponding to a difference between the lighting map (210) of a current iteration and the lighting map (210) of a previous iteration;
- a second sub-step (412) of determination of the reward map, by multiplying the observation map (200) with the lighting progress map;
- a third sub-step (414) of acquiring the reward by application of a predetermined function to the reward map.

FIG.1

## FIG.2

EP 4 390 603 B1

FIG.3

EP 4 390 603 B1

FIG.4

FIG.5

EP 4 390 603 B1

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060085106 A1